## Europäisches Patentamt
## European Patent Office
## Office européen des brevets

(19)

(11) Numéro de publication: **0 133 297**

**B1**

(12)

# FASCICULE DE BREVET EUROPÉEN

(45) Date de publication du fascicule du brevet:
**03.02.88**

(51) Int. Cl.⁴: **G 01 M 3/20**

(21) Numéro de dépôt: **84108862.8**

(22) Date de dépôt: **26.07.84**

(54) Groupe automatique de contrôle d'étanchéité d'une enceinte.

(30) Priorité: **01.08.83 FR 8312651**

(43) Date de publication de la demande:
**20.02.85 Bulletin 85/8**

(45) Mention de la délivrance du brevet:
**03.02.88 Bulletin 88/5**

(84) Etats contractants désignés:
**BE CH DE FR GB IT LI NL SE**

(56) Documents cité:
**LE VIDE, no. 93, mai-juin 1961, pages 141-142, Paris, FR; "Controle de l'étanchéité et détection des fuites par test au gaz ammoniac"**

(73) Titulaire: **STEIN INDUSTRIE Société Anonyme dite:, 19- 21, avenue Morane Saulnier, F-78140 Velizy Villacoublay (FR)**

(72) Inventeur: **Delahaye, Patrick, 20, rue des Cannoniers, F-59000 Lille (FR)**

(74) Mandataire: **Weinmiller, Jürgen, Lennéstrasse 9 Postfach 24, D-8133 Feldafing (DE)**

LIBER, STOCKHOLM 1988

**Description**

La présente invention porte sur le contrôle d'étanchéité d'une enceinte, utilisant pour la détection et la localisation de fuites éventuelles le virage d'un réactif coloré au contact de l'ammoniac gazeux choisi comme gaz traceur.

Un mode de détection de fuites à l'aide de l'ammoniac et d'un réactif coloré est décrit dans le document FR-A-1 505 339 pour le contrôle d'étanchéité d'enceintes à double paroi délimitant un espace intermédiaire clos. Selon ce document, le procédé consite à vidanger l'espace clos intermédiaire, à introduire dans cet espace intermédiaire l'ammoniac sous une pression voisine de la pression atmosphérique ou légèrement inférieure à celle-ci, à enduire le côté ou la face interne de la double paroi d'une peinture constituée par une solution de bleu de bromophénol et d'acide phosphorique choisie comme réactif coloré, à déceler la position de points de fuites éventuelles par détection d'un changement de coloration, d'un jaune initial à un bleu violet, du réactif coloré, puis à évacuer l'ammoniac de cet espace intermédiaire, par exemple par pompage, et après sa sortie de cet espace clos à l'état dissous dans de l'eau.

La mise en oeuvre de ce procédé est en pratique particulièrement longue et peu aisée.

Le document le Vide n° 93, mai-juin 1961 pages 141-142, Paris, FR; "Contrôle de l'étanchéité et détection des fuites par test au gaz ammoniac" décrit également un mode de détection de fuites éventuelles sur une enceinte. L'enceinte dans laquelle est fait préalablement un vide relatif est remplie de gaz ammoniac sous pression. Des bandes révélatrices posées sur les parties extérieures de l'enceinte, aux endroits à tester, permettent de localiser toute fuite. Une exposition des bandes révélatrices pendant plusieurs heures, permet de localiser des débits de fuite très faibles.

La présente invention a pour but de permettre des contrôles d'étanchéité très poussés en utilisant du gaz ammoniac tout en supprimant quasiment tout risque, pour l'opérateur et le personnel assurant ces contrôles, inhérent à l'utilisation du gaz ammoniac.

La présente invention a pour objet un groupe de contrôle d'étanchéité d'une enceinte fermée comportant une source d'ammoniac gazeux et utilisant, pour la détection de fuites éventuelles, le virage d'un réactif coloré au contact d'ammoniac gazeux remplissant sous pression ladite enceinte préalablement mise sous vide, caractérisé par le fait qu'il est automatique et qu'il comporte en outre une pompe à vide compatible avec l'ammoniac et une source de gaz de rinçage reliées à ladite enceinte par des canalisations et au moins un détecteur de pression inférieure à la pression atmosphérique et au moins un détecteur de pression supérieure à la pression atmosphérique montés directement sur ladite enceinte et reliés à des circuits détecteurs de seuils réglés spécifiquement pour des cycles de remplissage sous pression d'ammoniac, de vidange de l'ammoniac et de rinçage de l'enceinte et en ce que chacune desdites canalisations est sectionnée par une électro-vanne commandée directement par le circuit détecteur de seuils concerné pour chacun des cycles.

L'invention sera décrite ci-après plus en détail à l'aide d'un exemple de réalisation et en regard du dessin ci-annexé. Dans ce dessin:

- la figure 1 illustre un groupe automatique de contrôle d'étanchéité d'une enceinte fermée, selon l'invention,

- la figure 2 représente l'un des éléments de mesure utilisé dans ce groupe.

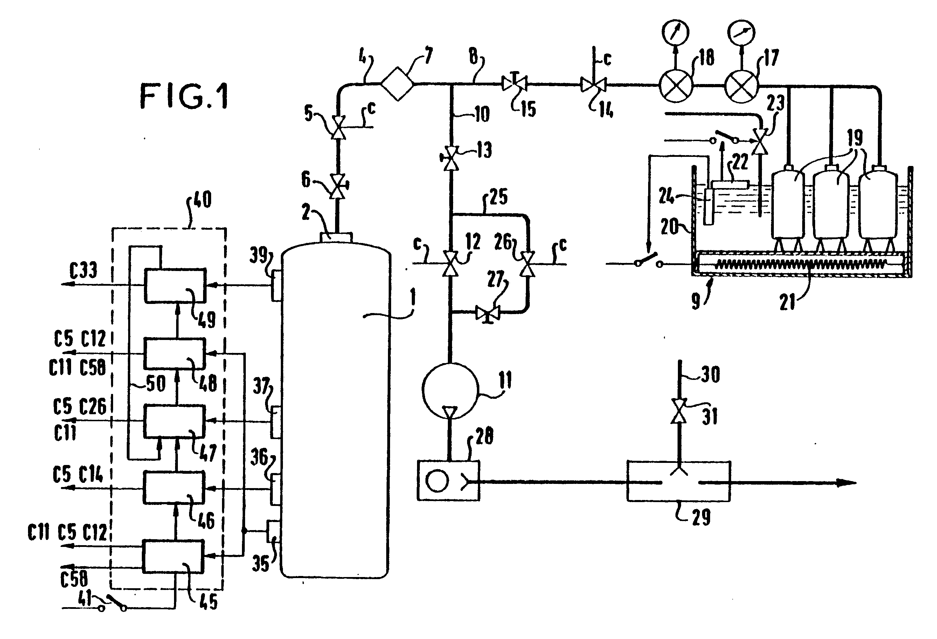

Dans cette figure 1, on a schématisé en 1 une enceinte à tester. Cette enceinte 1 est en matériau compatible avec l'utilisation d'ammoniac gazeux comme gaz traceur de test d'étanchéité. Cette enceinte 1 peut être une cuve, citerne ou analogue ou peut être, dans un cadre spécifique d'application envisagée, constituée par une enveloppe montée sur un échangeur thermique de séparateur-surchauffeur de vapeur, formé d'une manière générale connue par un ensemble de tubes cintrés en épingle à cheveux fixés par soudure sur une plaque tubulaire à travers laquelle s'effectuera l'alimentation des tubes en vapeur de surchauffe et l'échappement de vapeur de surchauffe. Dans ce dernier cas, le contrôle d'étanchéité portera sur les soudures de ces tubes en épingle à cheveux sur la plaque tubulaire qui, sur l'enveloppe, constitue le fond de l'enceinte fermée à tester. L'enveloppe ou plus généralement l'enceinte à tester présente un accès 2 pour son remplissage en produit qui doit être stocké ou pour son contrôle d'étanchéité.

Une canalisation principale 4 est reliée sur l'accès 2 de l'enceinte. Elle est équipée d'une première électro-vanne temporisée 5, la temporisation étant de l'ordre de 3 secondes, à laquelle est associée une première vanne manuelle 6 de sectionnement de la canalisation et d'un filtre tamis de dépoussiérage 7.

Sur cette canalisation principale 4 sont raccordées d'une part une canalisation 8 d'injection ammoniac gazeux reliée à une source d'ammoniac 9 et d'autre part une canalisation 10 de vidange sur laquelle est montée une pompe 11. La canalisation de vidange 10 est équipée d'une deuxième électro-vanne 12 à laquelle est associée une deuxième vanne manuelle 13; la canalisation d'injection d'ammoniac est elle même équipée d'une troisième électro-vanne 14 à laquelle est associée une troisième vanne manuelle 15.

L'alimentation en ammoniac 9 comporte une source d'ammoniac 19, dans l'exemple illustré, constituée par un jeu de trois bouteilles, disposées dans un bac d'eau 20 de grande capacité équipé en fond de résistances électriques 21 pour le chauffage de l'eau. Un régulateur 22 de niveau d'eau dans le bac 20 avec électro-vanne 23 d'alimentation en eau et une sonde de régulation thermique 24 contrôlent, ainsi que symbolisé, le niveau et la température du bain-marie, pour son maintien à 30°, de manière à permettre un débit maximal d'ammoniac en sortie des bouteilles.

Deux mano-détendeurs 17 et 18 sont montés à la suite l'un de l'autre sur la canalisation d'injection d'ammoniac 8, entre l'alimentation en ammoniac 9 et l'électro-vanne 14; ils assurent une double détente du gaz évitant une surpression au niveau de cette électro-vanne et dans les tronçons de canalisation aval. Ces mano-détendeurs seront réglés à 6 bars, pour le mano-détendeur 17 disposé du côté des bouteilles 19, et à 2 bars pour le mano-détendeur 18.

Sur la canalisation de vidange 10, est montée, en parallèle sur l'électro-vanne 12, une canalisation dérivée 25 elle-même équipée d'une quatrième électro-vanne 26 à laquelle est associée une quatrième vanne manuelle 27. Cette dernière vanne 27 est réglée de façon à créer une perte de charge. A la sortie de la pompe 11, la canalisation de vidange 10 traverse un clapet anti-retour d'évacuation 28, pour la protection de la pompe, puis un mélangeur 29 relié également à une canalisation d'eau 30 équipée d'une vanne 31 à réglage de débit. La canalisation de vidange 10 peut ensuite être reliée à un bac récupérateur, non illustré.

La canalisation 8 sera reliée pour le rinçage à une source de gaz de façon à permettre le balayage de l'enceinte pour l'élimination complète du gaz traceur. Le gaz pourra être de l'azote.

Pour le contrôle automatique d'étanchéité de l'enceinte 1, celle-ci est équipée de plusieurs détecteurs de pression. Ce sont ces pressions mesurées directement dans l'enceinte qui contrôlent et/ou conditionnent les différentes phases, ou cycles, du test d'étanchéité. Le groupe automatique de contrôle d'étanchéité comporte donc au moins un détecteur de mesure des pressions inférieures à la pression atmosphérique et au moins un autre détecteur de mesure des pressions supérieures à la pression atmosphérique. Ainsi, une jauge 35 de gamme de mesure s'étendant de 20 à $10^{-3}$ mbars est montée sur l'enceinte, elle y sera fixée par bride. Cette jauge 35 est du type de celle connue sous le nom Pirani, a variation de conductibilité électrique d'un filament à la pression, délivrant un signal électrique représentatif de la pression. Trois détecteurs de pression 36, 37 et 39 ayant des gammes de mesure différentes, s'étendant pour l'ensemble sensiblement de 0 bar à 2 bars relatifs, sont également fixés par bride sur l'enceinte 1. Ces détecteurs 36, 37 et 39 sont des modèles compatibles avec l'ammoniac, du type pressostat en inox.

Ces quatre détecteurs 35 à 37 et 39 ont leurs sorties reliées à un dispositif de commande 40 schématisé sous forme de cinq circuits 45 à 49 affectés au contrôle du déroulement des cycles successifs du test d'étanchéité et aux commandes des électro-vannes et, le cas échéant, de la pompe. Ces circuits sont essentiellement des détecteurs de seuils de pression, soit les seuils 2,5 mbars sensiblement (2 torrs) pour le circuit 45 relié à la jauge 35, 1,5 bar relatif pour le circuit 46 relié au détecteur de pression 36, 0 bar relatif pour le circuit 47 relié au détecteur de pression 37, 2,5 mbars sensiblement (2 torrs) pour le circuit 48 relié également à la jauge 35 et 0,5 bar relatif pour le circuit 49 relié au détecteur de pression 39. Le circuit 48 a la même fonction que le circuit 45, ils ne constitueront en principe qu'un seul et même circuit, la présentation sous forme de deux circuits ayant été adoptée pour des raisons de clarification du processus de test d'étanchéité.

Les différentes commandes des électro-vannes ou de la pompe delivrées par ces circuits 45 à 49 sont données au cours des explications ci-après du processus de test, ces commandes sont symbolisées par de simples sorties repérées par la lettre c accompagnée de la référence de l'électro-vanne concernée ou de la pompe, et sont relatives à l'alimentation électrique de commande des électro-vannes également indiquée par la lettre c, ou celle de la pompe.

Le démarrage du test d'étanchéité de l'enceinte 1 est effectué par simple enclenchement d'un bouton de commande symbolisé sous forme d'un interrupteur 41 relié au circuit 45. Cet enclenchement assure le déroulement des cycles successifs du test à savoir:
- un cycle de mise sous vide de l'enceinte,
- un cycle de remplissage d'ammoniac,
- un cycle de vidange d'ammoniac, précédé d'une temporisation de plusieurs heures permettant l'application du révélateur sur les zones à tester et l'examen d'éventuelles réactions à l'ammoniac,
- un cycle de rinçage de l'enceinte par injection d'azote, et
- un cycle de vidange finale de l'enceinte, ces deux derniers cycles pouvant être renouvelés plusieurs fois.

L'enclenchement du bouton de commande 41 provoque le départ du cycle de mise sous vide de l'enceinte, contrôlé par le circuit 45. Le circuit 45 commande alors le démarrage de la pompe 11 et l'ouverture des électro-vannes 5 et 12 présentes sur la canalisation principale 4 et celle de vidange 10. La temporisation, de 3 secondes, de l'électro-vanne 5 diffère son ouverture et permet en conséquence de faciliter le démarrage de la pompe 11 dont le pompage ne concerne alors que le volume réduit des canalisations séparant la pompe de cette électro-vanne.

Ce cycle de mise sous vide de l'enceinte prend fin par la détection, par le circuit 45, du seuil de 2,5 mbars sensiblement (2 torrs) dans l'enceinte 1. Par cette condition de fin de cycle, le circuit 45 ferme les électro-vannes 5 et 12 et arrête la pompe. Il provoque le départ du cycle de remplissage d'ammoniac contrôlé par le circuit 46.

Pour ce cycle de remplissage d'ammoniac, le circuit 46 assure la commande d'ouverture des électro-vannes 5 et 14. Cette alimentation d'ammoniac s'effectue à débit maximal en sortie des bouteilles 19 et à pression régulée à l'entrée de l'électro-vanne 14, le mano-détendeur 17 étant réglé à 6 bars et le mano-détendeur suivant 18 à 2 bars. Elle prend fin lors d'une détection de pression relative d'ammoniac dans l'enceinte de 1,5 bar, mesurée par le détecteur 36. Pour ce seuil de pression d'ammoniac le circuit 46 commande la fermeture des électro-vannes 14 et 5. A la fin de ce cycle, ce circuit 46 commande également l'arrêt de pressurisation de la source d'ammoniac 9, mise initialement dans cet état de pressurisation.

Cette fin de cycle de remplissage d'ammoniac sera avantageusement indiquée à un opérateur par un signal sonore ou un voyant lumineux.

Dès la fin de ce cycle de remplissage, en ammoniac, une temporisation ou une durée de maintien en pression, de l'ordre d'au moins dix heures, est utilisée pour la détection de fuites éventuelles. A cet effet, l'opérateur applique sur les zones à tester de l'enceinte, un révélateur sensible à l'ammoniac. Ce révélateur est par exemple une solution de bleu de bromophénol et d'acide phosphorique appliquée au pistolet à peinture sur les parois extérieures de l'enceinte, pour les zones à tester. Après un temps de séchage du révélateur, l'opérateur observera, pendant ce temps de maintien de l'enceinte sous pression d'ammoniac, tout changement de couleur, du jaune initial au bleu violet en présence d'ammoniac, pour détecter et localiser d'éventuelles fuites.

La durée d'examen de fuites éventuelles étant écoulée, on déclenche le cycle de vidange de l'ammoniac par une nouvelle mise sous vide de l'enceinte. Ce cycle de vidange de l'ammoniac met en oeuvre, l'un après l'autre, les deux circuits de commande 47 et 48.

Le départ de ce cycle n'est conditionné que par le seul maintien de l'enceinte sous pression d'ammoniac pendant un temps minimal d'examen. Au départ de ce cycle, on ouvre la vanne 31 présente sur la canalisation d'eau 30 et, par le circuit 47, on provoque l'ouverture des électro-vannes 5 et 26 et le démarrage de la pompe 11. La temporisation de l'électro-vanne 5 facilite encore le démarrage de la pompe et permet de s'assurer qu'un débit suffisant d'eau circule dans le mélangeur 29. Le choix de la commande de l'électro-vanne 26, à perte de charge supérieure à celle de l'électro-vanne 12 et réglée pour que la pression vers la pompe soit inférieure à la pression atmosphérique, permet de faire travailler la pompe à vide 11 sans surpression en amont. Le passage automatique du contrôle du cycle de vidange, du circuit 47 au circuit 48 s'effectue lorsque la pression d'ammoniac mesurée par le détecteur 37 passe à 0 bar relatif. Cette condition de pression fait basculer les commandes des électro-vannes 26 et 12: l'électro-vanne 26 vient se fermer tandis que l'électro-vanne 12 s'ouvre. Le contrôle de pression dans l'enceinte sera alors donné à partir de la jauge 35 tandis que c'est le circuit 48 qui contrôle la fin de cycle de vidange d'ammoniac. Cette fin de cycle de vidange d'ammoniac est donnée par la condition de vide à 2,5 mbars sensiblement (2 torrs) détectée par le circuit 48. Pour cette condition, le circuit 48 commande l'arrêt de la pompe 11 et la fermeture des électro-vannes 5 et 12 et enclenche le cycle de rinçage de l'enceinte contrôlé par le circuit 49.

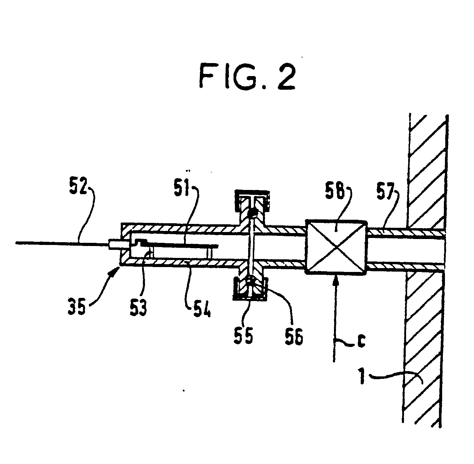

La mise en service des deux circuits 47 et 48 successivement pour ce cycle de vidange d'ammoniac, permet avantageusement d'isoler le filament de la jauge 35 de pressions supérieures à la pression atmosphérique et tout particulièrement des hautes pressions d'ammoniac, au départ et dans la première partie du cycle de vidange, qui lui seraient préjudiciables. Cet isolement de la jauge 35 sera décrit ci-après en regard de la figure 2.

Le cycle de rinçage, par injection d'azote dans l'enceinte 1 à partir de la canalisation 8 s'effectue jusqu'à détection d'une pression d'azote dans l'enceinte limitée à une valeur relative de 0,5 bar. Ce cycle de rinçage est suivi d'un nouveau cycle de vidange de l'enceinte jusqu'à une pression de 2,5 mbars sensiblement (2 torrs) ainsi que symbolisé par la flèche 50 liant le circuit 49 au circuit 47, ce cycle de vidange d'azote se déroule identiquement à celui de vidange d'ammoniac en mettant en cause successivement les deux circuits de commande 47 et 48. Ces cycles de rinçage à l'azote et de vidange de l'azote peuvent être renouvelés plusieurs fois pour s'assurer d'un nettoyage satisfaisant de l'enceinte.

Dans ce groupe automatique, compte-tenu du niveau de vide réalisé dans l'enceinte, la pompe 11 utilisée est une pompe à deux étages à palettes, sans pièce en alliage cuivreux et à circulation d'huile perdue.

Dans ce groupe automatique aussi, compte-tenu du test effectué avec de fortes pressions d'ammoniac, le sectionnement des canalisations a été obtenu par des électro-vannes doublées chacune par une vanne d'isolement manuelle. Les électo-vannes utilisées sont de type électromagnétique; elles sont étanches à la contre-pression, avec soufflet métallique sur l'ensemble mobile d'obturation. Sur leurs canalisations, ces électro-vannes sont normalement fermées leur alimentation étant coupée; elles sont commandés en ouverture au fur et à mesure du déroulement du test d'étanchéité.

Dans la figure 2, on a schématisé la jauge de mesure 35 du niveau de vide créé dans l'enceinte 1, cette jauge est de type général connu, tel que le modèle connu sous le nom Pirani, elle est cependant adaptée pour assurer l'isolement de son filament des fortes pressions et de la corrosion d'ammoniac et d'azote.

On a représenté pour cette jauge 35, en 51 son filament, qui en pratique forme une branche d'un pont de Wheastone non illustré, dont la variation de conductibilité électrique avec la pression traduit sur une sortie électrique 52 la pression mesurée. Ce filament est maintenu par des pattes de fixation 53 dans le corps tubulaire 54 de la jauge. Le corps tubulaire 54 contenant le filament 51 est monté par une bride 55 et avec un joint torique 56 sur un corps tubulaire 57 de prise de pression qui est partiellement engagé dans l'enceinte 1 et fixé sur ses parois. Ce modèle de jauge a été rendu insensible à la corrosion par l'ammoniac par l'emploi de nickel ou d'alliage à base de nickel et par un revêtement en résine sur les supports.

Sur ce dernier corps tubulaire 57 est montée une électro-vanne 58 assurant l'isolement du filament des pressions supérieures aux pressions atmosphériques et en particulier d'ammoniac. Cette électro-vanne sera normalement fermée, sa commande d'ouverture symbolisée par la la liaison c sera donnée lors d'une mise sous vide et d'une vidange de l'enceinte à partir d'une pression inférieure à la pression atmosphérique. Elle est donc commandée par le circuit 45 de mise sous vide initial de l'enceinte 1, ainsi que symbolisé par la commande C58 délivrée par ce circuit 45, dans la figure 1, et par le circuit 48 de vidange de l'enceinte à partir du seuil de pression de 0,5 bar relatif, ainsi que symbolisé par la commande C58 apparaissant sur ce circuit 48 dans la figure 1. Une telle disposition garantit les mesures précises effectuées par la jauge 35.

Ce groupe automatique de contrôle d'étanchéité à l'aide de l'ammoniac peut être utilisé pour tout matériel exigeant une étanchéité très rigoureuse. Il permet de détecter des débits de fuites de l'ordre de $10^{-8}$ Pa.m$^3$/sec. (7,5.10$^{-5}$ Lusec environ). Son agencement est tel qu'il permet également de limiter au maximum les risques dûs à l'ammoniac encourus par un opérateur.

**Revendications**

1. Groupe de contrôle d'étanchéité d'une enceinte fermée comportant une source d'ammoniac gazeux (19) et utilisant, pour la détection de fuites éventuelles, le virage d'un réactif coloré au contact d'ammoniac gazeux remplissant sous pression ladite enceinte (1) préalablement mise sous vide, caractérisé par le fait qu'il est automatique et qu'il comporte en outre une pompe à vide (11) compatible avec l'ammoniac et une source de gaz de rinçage reliées à ladite enceinte (1) par des canalisations (4, 8, 10) et au moins un détecteur (35) de pression inférieure à la pression atmosphérique et au moins un détecteur (36, 37, 39) de pression supérieure à la pression atmosphérique montés directement sur ladite enceinte (1) et reliés à des circuits détecteurs de seuils (45-49) réglés spécifiquement pour des cycles de remplissage sous pression d'ammoniac, de vidange de l'ammoniac et de rinçage de l'enceinte et en ce que chacune desdites canalisations (4, 8, 10) est sectionnée par une électro-vanne (5, 12, 26, 14) commandée directement par le circuit détecteur de seuils concerné pour chacun des cycles.

2. Groupe selon la revendication 1, caractérisé par le fait que la canalisation (4, 10) reliant l'enceinte (1) à la pompe à vide (11), présente une canalisation dérivée (25) montée en parallèle sur l'électro-vanne (12) qu'elle comporte et équipée elle-même d'une seconde électro-vanne (26), à perte de charge supérieure, l'une ou l'autre desdites électro-vannes (26 et 12) étant commandées par le circuit détecteur de seuils (47, 48) concerné pour le cycle de vidange de l'enceinte selon que la pression dans l'enceinte est ou n'est pas supérieure à la pression atmosphérique.

3. Groupe selon la revendication 2, caractérisé par le fait que ledit circuit détecteur de seuils concerné pour le cycle de vidange comporte un premier détecteur et un second détecteur (47, 48) dont les seuils sont réglés à 0 bar relatif et à 2,5 mbars sensiblement (2 torrs), respectivement.

4. Groupe selon l'une des revendications 1 à 3, caractérisé par le fait que ledit circuit détecteur de seuils (45) pour le cycle de mise sous vide de ladite enceinte est réglé à 2,5 mbars sensiblement (2 torrs).

5. Groupe selon l'une des revendications 1 à 4, caractérisé par le fait que ledit circuit détecteur de seuils (46) pour le cycle de remplissage d'ammoniac est réglé à 1,5 bar.

6. Groupe selon l'une des revendications 1 à 5, caractérisé par le fait que ladite source d'ammoniac (19) est constituée par un jeu de bouteilles d'ammoniac disposées dans un bac d'eau (20) régulé en niveau d'eau et en température.

7. Groupe selon la revendication 6, caractérisé par le fait que la canalisation reliant la source d'ammoniac (19) à ladite enceinte (1) est équipée de mano-détendeurs (17, 18) montés à la suite les une des autres à la sortie de la source d'ammoniac.

**Patentansprüche**

1. Kontrollgruppe mit einer Ammoniakgasquelle (19) zur Überprüfung der Dichtheit eines geschlossenen Behälters, wobei zur Feststellung eines etwaigen Lecks der Umschlag eines farbigen Reagenzmittels beim Kontakt mit dem Ammoniakgas benutzt wird, welches den genannten, zuvor evakuierten Behälter unter Druck ausfüllt, dadurch gekennzeichnet, daß sie automatisch arbeitet und eine mit dem Ammoniak verträgliche Vakuumpumpe (11) sowie eine Spülgasquelle aufweist, die mit dem Behälter (1) über die Leitungen (4, 8, 10) verbunden sind, sowie mindestens einen auf niedrigerem als Atmosphärendruck arbeitenden Detektor (35) und mindestens einem auf höherem als Atmosphärendruck arbeitenden Detektor (36, 37, 39), die direkt am Behälter (1) montiert und mit Schwellwertdetektorkreisen (45 bis 49) verbunden sind, welche speziell auf die Zyklen des Einfüllens von Ammoniak unter Druck, der Entnahme des Ammoniaks und der Spülung des Behälters eingestellt sind, und wobei jede der genannten Leitungen (4, 8, 10) durch ein Elektroventil (5, 12, 26, 14) unterteilt ist, das jeweils direkt von den für die Zyklen zuständigen Schwellwertdetektorkreisen gesteuert wird.

2. Kontrollgruppe nach Anspruch 1, dadurch gekennzeichnet, daß die den Behälter (1) mit der Vakuumpumpe (11) verbindenden Leitungen (4, 10) einen Bypass (25) parallel zu ihrem Elektroventil (12) aufweisen, der seinerseits ein zweites Elektroventil (26) mit höherem Druckabfall aufweist, wobei das eine oder das andere Ventil vom dem für den Entnahmezyklus zuständigen Schwellwertdetektorkreis (47, 48) gesteuert wird, je nachdem, ob der Druck im Behälter größer oder kleiner als Atmosphärendruck ist.

3. Kontrollgruppe nach Anspruch 2, dadurch gekennzeichnet, daß der für den Entnahmezyklus zustänsdige genannte Schwellwertdetektorkreis einen ersten und einen zweiten Detektor (47, 38) besitzt, deren Schwellwerte im wesentlichen auf 0 bar relativ bzw. 2,5 mbar (2 Torr) eingestellt sind.

4. Kontrollgruppe nach einem der Ansprüche 1 bis 3, dadurch gekennzeichnet, daß der für die Herstellung des Vakuums im Behälter zuständige Schwellwertdetektor (45) im wesentlichen auf 2,5 mbar (2 Torr) eingestellt ist.

5. Kontrollgruppe nach einem der Ansprüche 1 bis 4, dadurch gekennzeichnet, daß der für die Einfüllung des Ammoniaks zuständige Schwellwertdetektor (46) auf 1,5 bar eingestellt ist.

6. Kontrollgruppe nach einem der Ansprüche 1 bis 5, dadurch gekennzeichnet, daß die genannte Ammoniakquelle aus einem Satz Ammoniakflaschen in einem Wasserbassin (20) besteht, dessen Niveau und Temperatur geregelt werden.

7. Kontrollgruppe nach Anspruch 6, dadurch gekennzeichnet, daß die die Ammoniakquelle (19) mit dem Behälter (1) verbindende Leitung mit Druckentspannungsmanometern (17, 18) ausgerüstet ist, die nacheinander am Ausgang der Ammoniakquelle montiert sind.

detector (35) operating at a pressure lower than atmospheric pressure and at least one detector (36, 37, 39) operating at a pressure higher than atmospheric pressure mounted directly on the container (1) and connected with threshold detector circuits (45 to 49) specifically adjusted to the cycles of filling in pressurized ammonia, draining the ammonia and flushing the container, and wherein said ducts (4, 8, 10) are subdivided by an electric valve (5, 12, 26, 14) directly controlled by the threshold detector circuits related to the respective cycles.

2. A control group according to claim 1, characterized in that the ducts (4, 10) connecting the container (1) with a vacuum pump (11) comprise a bypass (25) parallel to the electric valve (12), which is equipped with a second electric valve (26) having a higher pressure drop, wherein the one or the other of the valves is controlled by the threshold detector circuit (47, 48) competent for the drain cycle, depending upon whether the pressure in the container is higher or lower than that of the atmosphere.

3. A control group according to claim 2, characterized in that the threshold detector circuit competent for the drain cycle comprises a first and a second detector (47, 48), the threshold values of which are adjusted essentially to zero bar relative respectively 2,5 mbars (2 torr).

4. A control group according to one of claims 1 to 3, characterized in that the threshold detector (45) competent for the creation of the vacuum in the container is adjusted essentially to 2,5 mbars (2 torr).

5. A control group according to one of claims 1 to 4, characterized in that the threshold detector (46) competent for the filling-in of the ammonia is adjusted to 1,5 bar.

6. A control group according to one of claims 1 to 5, characterized in that said ammonia source consists of s set of ammonia bottles placed in a water basin (20), the level and temperature of which are controlled.

7. A control group according to claim 6, characterized in that the duct connecting the ammonia source (19) with the container (1) is equipped with manometric pressure release valves, which are mounted one after the other at the output of the ammonia source.

**Claims**

1. A control group comprising an ammonia gas source (19) for testing the tightness of a closed container (1), using for the purpose of detecting possible leakages the change of a coloured agent when put into contact with the gazeous ammonia, which, put under pressure, fills the formerly evacuated container, characterized in that it operates automatically and further comprises a vacuum pump (11) compatible with the ammonia and a source of flush gas connected to said container by ducts (4, 8, 10), and at least one

**FIG.1**

# FIG. 2